# EUROPEAN PATENT SPECIFICATION

(11) **EP 1 205 659 B1**
(45) Date of publication and mention of the grant of the patent: **28.12.2005**
(21) Application number: 01309098.0
(22) Date of filing: 26.10.2001
(51) Int. Cl.: F02M 25/00, F02M 31/10

(54) **Method of reducing nitrogen oxide (NOX) emissions of super-charged piston engine**
Verfahren zur Reduzierung des NOX-Ausstosses einer aufgeladenen Kolbenkraftmaschine
Procédé de réduction des émissions NOX d'un moteur à pistons surchargé

(30) Priority: 03.11.2000 FI 20002425
(43) Date of publication of application: 15.05.2002
(73) Proprietor: Wärtsilä Finland Oy, 65380 Vaasa (FI)
(72) Inventor: Paro, Daniel, 66530 Kvevlax (FI); Hellén, Göran, 65280 Vaasa (FI)
(74) Representative: Hanson, William Bennett

(56) References cited:
- EP-A- 0 916 836
- EP-A- 1 076 169
- WO-A-99/42718
- US-A- 1 443 859
- US-A- 4 884 533
- US-A- 5 396 866
- US-A- 5 809 981
- US-A- 6 112 705
- PATENT ABSTRACTS OF JAPAN vol. 016, no. 082 (M-1215), 27 February 1992 (1992-02-27) -& JP 03 264732 A (DAIHATSU DIESEL MFG CO LTD), 26 November 1991 (1991-11-26)
- PATENT ABSTRACTS OF JAPAN vol. 014, no. 447 (M-1029), 25 September 1990 (1990-09-25) -& JP 02 176118 A (DAIHATSU DIESEL MFG CO LTD), 9 July 1990 (1990-07-09)

## Description

This invention relates to a method of reducing nitrogen oxide (NOx) emissions of a supercharged piston engine, the method being of the kind comprising compressing intake air to produce compressed intake air, introducing water (4,4',8) into the compressed intake air to increase the humidity of the intake air, and supplying the humidified and compressed intake air to the engine. The invention relates also to a supercharged piston engine of the kind comprising cylinders, a supercharger for compressing intake air, conduit means connecting the supercharger to said cylinders for supplying compressed intake air from the supercharger to said cylinders, and a nozzle arrangement associated with the conduit means for introducing water into compressed intake air passing through the conduit means to said cylinders. In this specification the term "water" is intended to include water or water-containing solutions in liquid or atomised form.

Nitrogen oxides (NOx) are formed at high combustion temperatures in the cylinder of a piston engine and are discharged to the atmosphere along with exhaust gases. Due to the harmful effects of nitrogen oxide emissions it is a general aim to reduce these emissions.

It is known that the addition of water in the combustion process and in combustion air reduces the formation of nitrogen oxides. This phenomenon is based, among other things, on the cooling effect of the added water. In practice, the addition of water into the combustion process of piston engines has been realized in two alternative ways; the water being fed either directly to the combustion chamber of the cylinder or via ducting carrying intake air to the engine.

In US-A-5758606 there is disclosed a method of feeding water into compressed intake air of a supercharged engine after the supercharger. The water is first heated by heated "cooling" water of the engine and is fed into a separate humidification tower in which atomised water evaporates. This known arrangement is impractical due, among other things, to the space requirements of the humidification tower. It also carries a certain safety risk because large humidification towers operate at high pressure.

Injecting water and intake air into the combustion chamber does not impair the shaft efficiency of the engine as such. However in certain circumstances the temperature of the intake air needs to be raised in order to raise the humidity of the intake air sufficiently to reduce the creation of nitrogen oxides and this in turn decreases the mass flow of the intake air and its oxygen content. The amount of water which can be introduced into the combustion chamber is, at most, the amount which remains in vapour form at the prevailing pressure and temperature of the intake air. Thus the amount of water that can be introduced with the intake air into the combustion chamber is limited by the saturation of the water vapour in the intake air. The amount of water required to be added is relatively high because part of the water may not be utilised because of continuous humidification during the scavenging stage of the cylinders when both the inlet and outlet valves are simultaneously open.

In EP-A-0683307 there is shown an apparatus for feeding water directly into cylinders of an engine, the feeding being dependent on the firing order of the engine. Water is injected during the induction or inlet stroke under the control of a control unit, which utilises engine speed, piston position and/or operating conditions of the engine as control parameters. The optimum distribution of water into the combustion chamber so that excess water is not injected and, on the other hand, so that a desired effect should be accomplished, is a problem with this known apparatus.

It is known as such to inject water directly into the combustion chamber by introducing the water together with the fuel or by alternating water and fuel injection with a common injector arrangement.

When water is injected directly into the combustion chamber, injection may also be achieved during the compression stroke, either before the actual combustion process and/or during it. However, although this injection moment is favourable with respect to the reduction in the formation of nitrogen oxides and to undisturbed power output, it is unfavourable with respect to shaft efficiency. This is because at the end of compression the pressure of the compressed air and/or the mixture of air and fuel decreases as a result of the water feeding, so that the engine must do such compression work which cannot be utilised in the expansion stroke. Another factor which decreases the shaft efficiency of the engine is the relatively high pressure, typically about 200 bar, required to feed the water into a cylinder which pressure must, of course, exceed the pressure prevailing in the cylinder at the moment of injection.

Direct water injection into the combustion chamber during the inlet stroke is favourable as such since, for example, a decrease of pressure in the cylinder is accomplished by the introduction of water. This facilitates the filling of the cylinder with air or with a mixture of air and fuel and thus decreases the work of the compressor, which is favourable with respect to shaft efficiency and power output of the engine. This phenomenon may be further enhanced by means of the present invention.

WO-A-99/42718 and US-A-5396866 both describe methods according to the preamble of claim 1.

It is an object of the invention to provide an enhanced method of and arrangement for reducing nitrogen oxide emissions in a supercharged piston engine, which method is based on feeding water into combustion air, but in which drawbacks of prior art methods have been substantially eliminated. Specifically, an object of the invention is to provide a method and arrangement which, in addition to reducing nitrogen oxides, is advantageous with respect to shaft efficiency, power output and the required amount of water.

The objects of the invention are met substantially as is disclosed in the ensuing claims 1 and 11.

According to an advantageous embodiment of the invention a method of reducing nitrogen oxide (NOx) emissions in a supercharged piston engine comprises increasing the pressure level of intake air by means of a supercharger from ambient pressure level to an elevated pressure level and feeding water into the intake air before leading the intake air into the cylinders of the engine. In this way the humidity of the compressed intake air is increased at elevated pressure level to a higher humidity level. Additionally, operation of a heat exchanger provided in an intake air conduit controls the temperature of the compressed intake air supplied to an air intake chamber. The operation of the heat exchanger and/or the injection of the water is controlled by means of a control arrangement based on the measurement of air conditions in the air intake chamber.

The measurement of air conditions preferably comprises measuring at least the temperature and humidity of the air and advantageously also involves air pressure measurement. It is possible to store operating information of the heat exchanger required for a certain amount of water injection and distribution of water between different nozzles as recipe information in the control arrangement.

Heat is supplied to the compressed intake air before being supplied to the cylinders of the engine in such a manner that the introduced or injected water is evaporated, whereby it is possible to achieve very small nitrogen oxide emissions. Water is conveniently fed into the combustion air in several stages and the temperature of the compressed intake air is changed between the stages.

Water may be fed into each cylinder of the engine in order to further decrease nitrogen oxide emissions particularly at partial loads. This water is favourably fed into the cylinders in addition to the water fed into the intake air.

A first amount of water is first introduced into the compressed intake air and heat is supplied to the intake air during or after the water injection and, additionally, a second amount of water is further introduced into the compressed intake air after the additional heat has been supplied to the intake air. The second amount of water may be introduced into the intake air or directly into the combustion chamber of the engine. Favourably the first amount of water is such that it utilises the heat of the compressed intake air so that the temperature of the intake air decreases below 85°C

Suitably the method of the invention is specifically advantageously realised so that heat is transferred as required to the intake air from a cooling system of the engine in order heat the moist intake air. In addition a third amount of water may be fed into each cylinder of the engine for further decreasing nitrogen oxide emissions. The third amount of water is fed into each cylinder of the engine particularly favourably while the engine is running at partial load, typically below 40-60% load. Preferably in the method according to the invention water is injected in total at a rate of 200-600 g per kWh-unit produced by the engine. In this way it is possible to achieve very low nitrogen oxide emissions and simultaneously to maintain optimised operation of the engine. Also unnecessary condensation of water vapour can be minimised.

Preferably introduction of water to the compressed intake air and to the cylinders (i.e. the first, second and third amounts of water injected) is controlled based on at least one of the following values measured and/or defined while the engine is running: temperature and humidity of ambient air used by the engine; temperature and humidity of intake air of the engine; load and/or rotational speed of the engine; amount of nitrogen oxides in the exhaust gases; and visible smoke of exhaust gases. Advantageously, the amount of water fed at each temperature and pressure level is such that the humidity of air increases up to at least 70%-100% humidity level.

The supercharged piston engine arrangement of the present invention for reducing nitrogen oxide emissions comprises a piston engine, a supercharger in connection with each cylinder of the engine through intake air conduit means and a nozzle arrangement in connection with the intake air conduit means for feeding water in to the intake air, wherein a heat exchanger is provided in connection with the intake air conduit means for supplying heat to the intake air. Advantageously the heat exchanger is connectable with cooling system of the engine. Additionally the engine comprises a direct water injection arrangement for each cylinder. Advantageously the heat exchanger is constructed as an integral part of the engine.

By means of the invention, an advantageous arrangement is accomplished with respect to both the reduction of nitrogen oxides and the flexible operation of the engine whereby nitrogen oxide emissions are minimised in all operating circumstances of the engine. Additionally, with the arrangement of the invention, it is possible to run the engine without using water injections if so desired. With the arrangement of the invention most often it is possible to avoid using a separate NOx-catalyser, which considerably reduces space requirement.

Embodiments of the invention will now be described, by the way of example only, with particular reference to the accompanying drawings, in which:
Figure 1 illustrates a schematic view of a preferred embodiment of the invention; and
Figure 2 graphically illustrates in a schematic manner heat balance according to the water feeding arrangement of Figure 1.

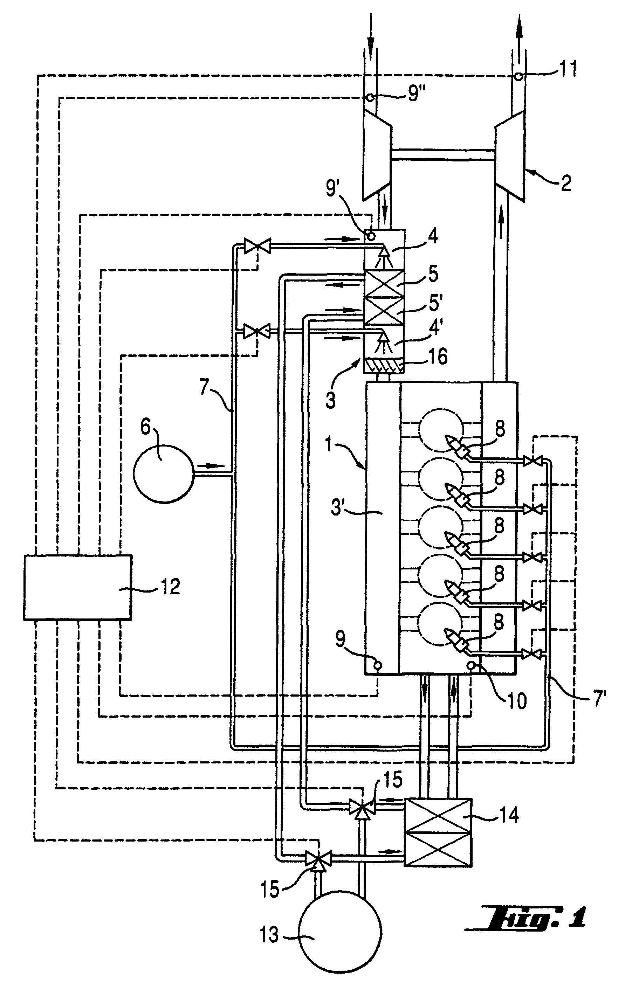

Figure 1 shows a piston engine generally designated by the reference numeral 1 connected to an exhaust gas supercharger 2 in a manner known as such. A nozzle arrangement 4,4' for feeding water into inlet or intake air is arranged in a conduit 3 which is an extension of, or a portion of, a conduit connecting the supercharger 2 and the engine. In order to change the temperature of the intake air, a heat exchanger arrangement 5,5' is also arranged in the conduit 3. The conduit 3 is connected to an air chamber 3' of the engine 1 from which air is led into each cylinder of the engine. The heat exchanger arrangement preferably comprises two distinct heat exchangers 5 and 5'. In Figure 1 a droplet separator 16 is also shown which may be installed if so desired. Coupling of the heat exchangers 5,5' in Figure 1 is only exemplary. As an alternative coupling (not shown), the heat exchangers may be connected in separate flow circuits. Preferably, the heat exchangers are integrated into the structure of the engine or as a part of the air chamber 3' or even as a part of the body of the engine. Additionally the arrangement comprises a connection to a cooling system 14 of the engine 1, whereby heat from cooling of the engine can be transferred to the intake air. This connection or coupling may be realised alternatively by a flow channel arrangement internal to the engine.

The engine arrangement of Figure 1 also comprises a source of water 6 which may vary according to the application of the engine. In a ship's engine the water may be properly treated seawater originating from the water on which the ship sails. In other cases the water may be taken from a water distribution pipe system. The source of water 6 is connected by ducting 7 to a nozzle arrangement 4,4' provided in the channel 3 and by ducting 7' to an injection arrangement, such as a nozzle 8, arranged in association with each cylinder. In this context by "water" is meant pure water or water containing solution.

The engine arrangement also comprises measuring probes 9,9' for measuring operating parameters or conditions, such as the temperature and humidity of the intake air, and arranged in the conduit 3 both before and after processing the intake air. A probe 10 for defining the state of operation, such as the load and/or speed, of the engine as well as a probe 11 for defining the state, such as the amount of nitrogen oxides and/or of visible smoke, of the exhaust gases are also provided. Additionally, it is possible to provide a probe 9" for measuring the condition of intake air before it is compressed in the supercharger 2. These aforementioned probes are connected to a control arrangement 12 which controls the operation of each water introducing or injecting means 4,4',8 in predefined manner based on the measurements. The control arrangement 12 may be a separate or integral part of control system of the engine. The control arrangement 12 is also in connection with a valve arrangement 15 by means of which the coupling or operation of heat exchangers 5,5' can be altered according to whether the intake air needs to be warmed or cooled. In the embodiment illustrated cooling takes place by connecting the heat exchangers to a supply of cooling medium 13.

In the arrangement according to Figure 1 while the piston engine is running intake air is led through the supercharger 2 where it is compressed and is then fed by means of the conduit 3 into the engine. The pressure of the intake air is increased from ambient pressure to an elevated pressure level in the supercharger 2. In the conduit 3 or before leading the air into the engine, water is fed into the compressed intake air by means of nozzles 4 thereby increasing the humidity of the intake air. After the introduction of the water into the intake air by means of the nozzles 4, the temperature of the compressed intake air is altered with the assistance of the heat exchanger 5,5' depending on circumstances. The amount of water to be fed depends in turn, for example, on the desired reduction level of nitrogen oxides.

According a certain operating mode of the method of the invention, a first amount of water is fed at a first stage by nozzle 4 to the compressed intake air under control of the control arrangement 12 as a result of which the temperature of the intake air decreases and its humidity increases. After or during this stage, heat is supplied to the compressed intake air by means of the heat exchanger 5,5' and the temperature of the intake air is increased. Additionally, while the engine is running in partial load, a third amount of water is fed or injected into each cylinder of the engine by nozzles 8. Advantageously, when the load of the engine is less than 40-60%, water is fed directly to each cylinder of the engine in addition to being fed into the intake air.

It is possible for a second amount of water also to be supplied to the compressed intake air by means of nozzle 4' depending on the circumstances. In this operating mode heat is supplied to the humid intake air from the cooling system 14 of the engine. The first amount of water is adapted to be such that the air cools down preferably to at least about 85°C.

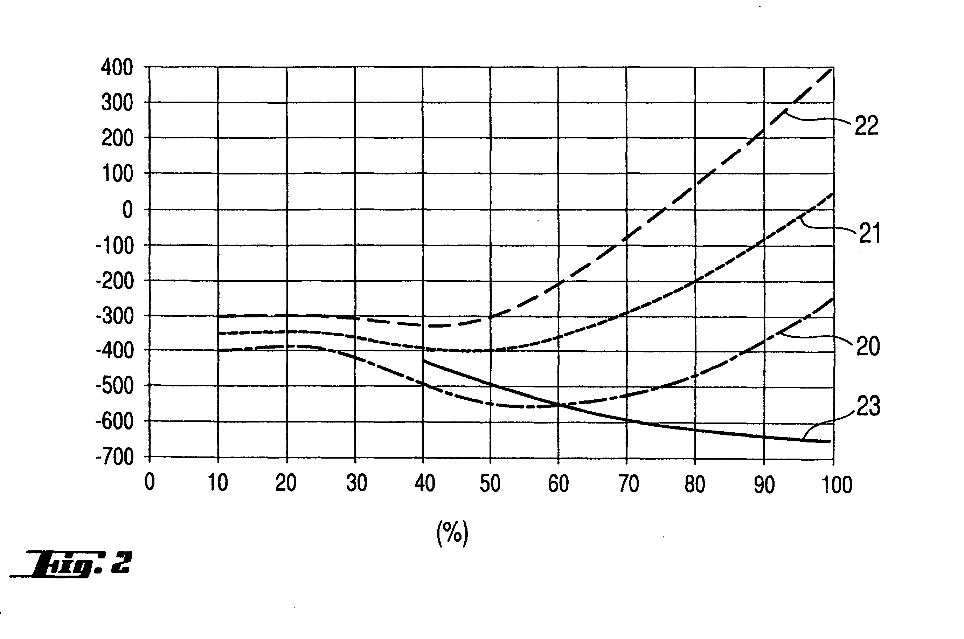

In Figure 2 there is shown by way of example a heat balance of the water feeding arrangement in such a manner that the y-axis depicts heat power balance and the x-axis depicts the load of the engine in percentage terms. Above the zero level each unit process is exothermal and below the zero level it requires additional heat.

Referring to Figures 1 and 2 according to another operating mode of the invention, in a method of reducing nitrogen oxide (NOx) emissions of a supercharged piston engine, a control arrangement 12 defines and delivers control commands regularly based on predetermined set values and measurements obtained from probes 9,9',9", 10 and 11 measuring inter alia the condition of air, the engine load and/or the engine speed, as well as the NOx-content of exhaust gases and/or the amount of visible smoke. By means of control commands delivered by the control arrangement 12, the distribution and amount of water to different nozzles 4,4',8 is controlled together with the control of the operation of the heat exchangers 5,5' in order to control the temperature of the intake air.

In the control arrangement 12 there is stored, as set values, certain reduction levels of nitrogen oxide (NOx) which correspond to a certain reduction level compared with a situation where the method of the invention would not be utilised. The curves 20,21,22 in Figure 2 represent these reduction levels as a function of engine load. The control arrangement 12 defines a water injection requirement corresponding to each reduction set level of nitrogen oxide and engine load or speed, as well as the feeding ratio of water to different nozzles 4,4',8. Based on this information the control arrangement 12 controls the nozzles for injecting the desired amount of water. The control arrangement 12 also controls the operation of the heat exchangers 5,5' based on information measured by the intake air probes 9,9' as will be explained in the following. When the heat content of the compressed intake air corresponds with or exceeds the heat required by the amount of water injected by the nozzles 4,4' and/or when the intake air temperature exceeds a set value, the control arrangement controls the heat exchanger 5,5' to cool the air. This situation corresponds in Figure 2 to the nitrogen oxide reduction level depicted by curve 22 at a load of the engine over about 75%. In this region the process is exothermal. In the example illustrated, curve 22 corresponds to about a 65% reduction of nitrogen oxides with a certain type of engine. In the situation where the heat of the intake air is lower than the heat required by the amount of water injected by nozzles 4,4' and/or the temperature of the intake air to be fed into the engine at the probe 9 is below its set value, the control arrangement 12 controls the heat exchanger to heat the air. Advantageously this is accomplished so that the control arrangement 12 of the engine couples the heat exchangers 5,5' of Figure 1 to the cooling system 14 of the engine 1 by means of valve arrangement 15. This situation corresponds in the presentation of Figure 2, for example, to the reduction level depicted by curve 21 being 40-95% of the load area of the engine. The curve 21 corresponds to an 80% nitrogen oxide reduction level. When the control arrangement during continuous operation defines the situation to be such that the heat of the intake air is less than the heat required by the water injected by nozzles 4,4' and simultaneously the heat extracted from the engine's cooling system 14 exceeds a certain set value, the control arrangement restricts the amount of water injected through nozzles 4,4' to the intake air to the prevailing amount and controls possible additionally required water injection to be injected through the nozzles 8 directly to the cylinders of the engine. This situation corresponds in Figure 2, for example, to the reduction level depicted by curve 20, being the load area below 60% of engine 1. In this load area the heat 23 usable from the cooling system of the engine is less that the total amount of water corresponding to the curve 20 would require. The curve 20 corresponds to a 90% nitrogen oxide reduction level. Thus, by operating as outlined above, a very high reduction in the nitrogen oxides' content of the exhaust gases is obtained also at partial loads of the engine.

The invention is not limited to the practical applications and numerical values shown but several modifications of the invention are reasonable within the scope of the attached claims.

## Claims

1. A method of reducing nitrogen oxide (NOx) emissions of a supercharged piston engine (1), comprising compressing intake air to produce compressed intake air, introducing water (4,4',8) into the compressed intake air to increase the humidity of the intake air, and supplying the humidified and compressed intake air to the engine, wherein the temperature of the compressed intake air, in addition to being influenced by the introduction of water, is controlled by being passed through heat exchanger means (5,5') before being supplied to the engine, the compressed intake air being heated before being supplied to the engine so as to evaporate the introduced water, **characterised in that** a first amount of water (4) is introduced into the compressed intake air before or during said heating of the compressed intake air, and **in that** a second amount of water (4') is introduced into the compressed intake air after said heating of the compressed intake air.

2. A method according to claim 1, **characterised in that** the intake air is supplied to an air chamber (3') before being supplied to cylinders of the engine, and **in that** operation of the heat exchanger means is controlled by a control arrangement based on the measurement of air condition in the air chamber (3').

3. A method according to claim 1 or 2, **characterised in that** the introduction of said first amount of water decreases the temperature of the compressed intake air to below 85°C.

4. A method according to claim 1 or 2, **characterised in that** heat is transferred to the compressed intake air from a cooling system of the engine (1).

5. A method according to any one of the preceding claims, **characterised in that** water (8) is fed into each cylinder of the engine for further decreasing nitrogen oxide emissions.

6. A method according to claim 5, **characterised in that** the water (8) fed into each cylinder of the engine is fed into the cylinders while the engine is running at partial load and is fed in addition to the water fed into the compressed intake air.

7. A method according to claim 6, **characterised in that** water is fed directly into each cylinder of the engine while the load of the engine (1) is less than 60% load, preferably less than 40% load.

8. A method according to any one of the preceding claims, **characterised in that** the total amount of water is introduced at a rate of 200-600 g per kWh-unit produced by the engine.

9. A method according to claim 6 or 7 or claim 10 when dependent on claim 6 or 7, **characterised in that** the introduction of water to the compressed intake air and to the cylinders is controlled based on at least one of the following values measured and/or defined while the engine (1) is running: temperature and humidity (9") of ambient air used by the engine; temperature and humidity (9',9') of the compressed intake air of the engine; load and/or rotational speed (10) of the engine; amount of nitrogen oxides in exhaust gases from the engine; and visible smoke of exhaust gases (11) from the engine.

10. A method according to any one of the preceding claims, **characterised in that** the amount of water introduced into the compressed intake air at a particular temperature and pressure increases the humidity of the compressed intake air up to at least a 70%-100% humidity level.

11. A supercharged piston engine (1) comprising cylinders, a supercharger (2) for compressing intake air, conduit means (3) connecting the supercharger to said cylinders for supplying compressed intake air from the supercharger to said cylinders, and a nozzle arrangement (4,4') associated with the conduit means (3) for introducing water into compressed intake air passing through the conduit means (3) to said cylinders, wherein heat exchanger means is associated with the conduit means (3) to heat compressed intake air passing through the conduit means, **characterised in that** said nozzle arrangement (4,4.') comprises nozzles arranged to feed water into the compressed intake air both before and after the heat exchanger means (5,5') in the air flow direction.

12. An engine according to claim 11, **characterised in that** the heat exchanger means (5,5') is connectable with an engine cooling system (14).

13. An engine according to claim 11 or 12, **characterised in that** the engine (1) further comprises a water injection arrangement (8) for injecting water directly into each cylinder.

14. An engine according to claim 11, 12 or 13, **characterised in that** the heat exchanger means (5,5') comprises an integral part of the construction of the engine (1).

15. An engine according to any one of claims 11 to 14, **characterised in that** the nozzle arrangement (4,4') comprises several nozzles operable independently to introduce water into the compressed intake air as required.

## Patentansprüche

1. Verfahren zur Reduzierung des Stickoxidausstoßes (NOx-Ausstoßes) eines aufgeladenen Kolbenmotors (1), das Verdichten von Ansaugluft zur Erzeugung von verdichteter Ansaugluft, Einleiten von Wasser (4, 4', 8) in die verdichtete Ansaugluft zur Erhöhung der Feuchtigkeit der Ansaugluft und Zuführen der befeuchteten und verdichteten Ansaugluft zum Motor umfasst, wobei die Temperatur der verdichteten Ansaugluft vor der Zufuhr zum Motor zusätzlich zur Beeinflussung durch das Einleiten von Wasser durch Hindurchführen durch ein Wärmetauschermittel (5, 5') gesteuert wird, wobei die verdichtete Ansaugluft vor der Zuführung zum Motor erwärmt wird, um das eingeleitete Wasser zu verdampfen, **dadurch gekennzeichnet, dass** eine erste Menge Wasser (4) in die verdichtete Ansaugluft vor oder während des Erwärmens der verdichteten Ansaugluft eingeleitet wird und dass eine zweite Menge Wasser (4') nach dem Erwärmen der verdichteten Ansaugluft in die verdichtete Ansaugluft eingeleitet wird.

2. Verfahren nach Anspruch 1, **dadurch gekennzeichnet, dass** die Ansaugluft einer Luftkammer (3') zugeführt wird, bevor sie den Zylindern des Motors zugeführt wird, und dass der Betrieb des Wärmetauschermittels durch eine Steueranordnung auf Grundlage der Messung des Luftzustands in der Luftkammer (3') gesteuert wird.

3. Verfahren nach Anspruch 1 oder 2, **dadurch gekennzeichnet, dass** das Einleiten der ersten Wassermenge die Temperatur der verdichteten Ansaugluft auf unter 85° verringert.

4. Verfahren nach Anspruch 1 oder 2, **dadurch gekennzeichnet, dass** Wärme von einem Kühlsystem des Motors (1) auf die verdichtete Ansaugluft übertragen wird.

5. Verfahren nach einem der vorhergehenden Ansprüche, **dadurch gekennzeichnet, dass** Wasser (8) in jeden Zylinder des Motors geleitet wird, um den Stickoxidausstoß weiter zu reduzieren.

6. Verfahren nach Anspruch 5, **dadurch gekennzeichnet, dass** das in jeden Zylinder des Motors geleitete Wasser (8) in die Zylinder geleitet wird, während der Motor mit Teillast läuft, und zusätzlich zu dem in die verdichtete Ansaugluft geleiteten Wasser eingeleitet wird.

7. Verfahren nach Anspruch 6, **dadurch gekennzeichnet, dass** das Wasser direkt in jeden Zylinder des Motors geleitet wird, während die Last des Motors (1) weniger als 60% Last, vorzugsweise weniger als 40% Last, beträgt.

8. Verfahren nach einem der vorhergehenden Ansprüche, **dadurch gekennzeichnet, dass** die Gesamtwassermenge mit einer Rate von 200 - 600 g pro vom Motor erzeugter kWh-Einheit eingeleitet wird.

9. Verfahren nach Anspruch 6 oder 7 oder Anspruch 10, sofern von Anspruch 6 oder 7 abhängig, **dadurch gekennzeichnet, dass** das Einleiten von Wasser in die verdichtete Ansaugluft und die Zylinder auf Grundlage mindestens eines der folgenden Werte gesteuert wird, die gemessen und/oder definiert werden, während der Motor (1) läuft: Temperatur und Feuchtigkeit (9'') von von dem Motor verwendeter Umgebungsluft; Temperatur und Feuchtigkeit (9', 9') der verdichteten Ansaugluft des Motors; Last und/oder Drehzahl (10) des Motors; Stickoxidmenge in den Abgasen aus dem Motor und sichtbarer Rauch von Abgasen (11) aus dem Motor.

10. Verfahren nach einem der vorhergehenden Ansprüche, **dadurch gekennzeichnet, dass** die in die verdichtete Ansaugluft bei einer bestimmten Temperatur und einem bestimmten Druck eingeleitete Wassermenge die Feuchtigkeit der verdichteten Ansaugluft bis zu einer Feuchtigkeitshöhe von mindestens 70% - 100% erhöht.

11. Aufgeladener Kolbenmotor (1) mit Zylindern, einem Lader (2) zum Verdichten der Ansaugluft, einem Leitungsmittel, das den Lader mit den Zylindern verbindet, um verdichtete Ansaugluft vom dem Lader den Zylindern zuzuführen, und eine dem Leitungsmittel (3) zugeordnete Düsenanordnung (4, 4') zum Einleiten von Wasser in verdichtete Ansaugluft, die durch das Leitungsmittel (3) zu den Zylindern strömt, wobei dem Leitungsmittel (3) ein Wärmetauschermittel zum Erwärmen der das Leitungsmittel durchströmenden Ansaugluft zugeordnet ist, **dadurch gekennzeichnet, dass** die Düsenanordnung (4, 4') Düsen umfasst, die zum Zuführen von Wasser in die verdichtete Ansaugluft sowohl vor als auch hinter dem Wärmetauschermittel (5, 5') in Luftströmungsrichtung angeordnet sind.

12. Motor nach Anspruch 11, **dadurch gekennzeichnet, dass** das Wärmetauschermittel (5, 5') mit einem Motorkühlsystem (14) verbunden werden kann.

13. Motor nach Anspruch 11 oder 12, **dadurch gekennzeichnet, dass** der Motor (1) weiterhin eine Wassereinspritzanordnung (8) zum direkten Einspritzen von Wasser in jeden Zylinder umfasst.

14. Motor nach Anspruch 11, 12 oder 13, **dadurch gekennzeichnet, dass** das Wärmetauschermittel (5, 5') einen integralen Teil der Konstruktion des Motors (1) bildet.

15. Motor nach einem der Ansprüche 11 bis 14, **dadurch gekennzeichnet, dass** die Düsenanordnung (4, 4') mehrere Düsen umfasst, die unabhängig betrieben werden, um nach Bedarf Wasser in die verdichtete Ansaugluft einzuleiten.

## Revendications

1. Procédé de réduction des émissions d'oxyde d'azote (NOx) d'un moteur à piston suralimenté (1), comprenant la compression de l'air d'admission pour produire de l'air d'admission comprimé, l'introduction d'eau (4, 4', 8) dans l'air d'admission comprimé pour augmenter l'humidité de l'air d'admission, et fournir l'air d'admission humidifié et comprimé au moteur, dans lequel la température de l'air d'admission comprimé, en plus d'être influencée par l'introduction d'eau, est contrôlée par un passage par un moyen échangeur de chaleur (5, 5') avant qu'il soit fourni au moteur, l'air d'admission comprimé étant chauffé avant d'être fourni au moteur de manière à ce que l'eau introduite s'évapore, **caractérisé en ce qu'**une première quantité d'eau (4) est introduite dans l'air d'admission comprimé avant ou pendant ledit chauffage de l'air d'admission comprimé, et **en ce qu'**une deuxième quantité d'eau (4') est introduite dans l'air d'admission comprimé après ledit chauffage de l'air d'admission comprimé.

2. Procédé selon la revendication 1, **caractérisé en ce que** l'air d'admission est fourni à une chambre à air (3') avant d'être fourni aux cylindres du moteur, et **en ce que** le fonctionnement du moyen échangeur de chaleur est contrôlé par un agencement de contrôle basé sur la mesure de l'état de l'air dans la chambre à air (3').

3. Procédé selon la revendication 1 ou 2, **caractérisé en ce que** l'introduction de ladite première quantité d'eau fait baisser la température de l'air d'admission comprimé jusqu'en dessous de 85°C.

4. Procédé selon la revendication 1 ou 2, **caractérisé en ce que** de la chaleur est transférée à l'air d'admission comprimé depuis un système de refroidissement du moteur (1).

5. Procédé selon l'une quelconque des revendications précédentes, **caractérisé en ce que** de l'eau (8) est fournie dans chaque cylindre du moteur pour faire davantage baisser les émissions d'oxyde d'azote.

6. Procédé selon la revendication 5, **caractérisé en ce que** l'eau (8) fournie dans chaque cylindre du moteur est fournie dans les cylindres pendant que le moteur tourne en charge partielle et est fournie en plus de l'eau fournie à l'air d'admission comprimé.

7. Procédé selon la revendication 6, **caractérisé en ce que** l'eau est fournie directement dans chaque cylindre du moteur tandis que la charge du moteur (1) est inférieure à 60% de charge, de préférence inférieure à 40% de charge.

8. Procédé selon l'une quelconque des revendications précédentes, **caractérisé en ce que** la quantité d'eau totale est introduite à un taux de 200-600 g par kWh produit par le moteur.

9. Procédé selon la revendication 6 ou 7 ou selon la revendication 10 lorsqu'elle dépend de la revendication 6 ou 7, **caractérisé en ce que** l'introduction d'eau dans l'air d'admission comprimé et dans les cylindres est contrôlée sur la base d'au moins l'une des valeurs suivantes mesurées et/ou définies pendant que le moteur (1) tourne : la température et l'humidité (9") de l'air ambiant utilisé par le moteur ; la température et l'humidité (9', 9') de l'air d'admission comprimé du moteur ; la charge et/ou la vitesse de rotation (10) du moteur ; la quantité d'oxydes d'azote dans les gaz d'échappement du moteur ; et la fumée des gaz d'échappement visible (11) du moteur.

10. Procédé selon l'une quelconque des revendications précédentes, **caractérisé en ce que** la quantité d'eau introduite dans l'air d'admission comprimé à une température et une pression particulières augmente l'humidité de l'air d'admission comprimé jusqu'à au moins un niveau d'humidité de 70%-100%.

11. Moteur à piston suralimenté (1) comprenant des cylindres, un compresseur à suralimentation (2) pour comprimer l'air d'admission, un moyen de conduit (3) reliant le compresseur à suralimentation auxdits cylindres pour fournir de l'air d'admission comprimé provenant du compresseur à suralimentation auxdits cylindres, et un agencement de buses (4, 4') associé au moyen de conduit (3) pour introduire de l'eau dans l'air d'admission comprimé passant à travers le moyen de conduit (3) vers lesdits cylindres, le moyen échangeur de chaleur étant associé au moyen de conduit (3) pour chauffer l'air d'admission comprimé passant à travers le moyen de conduit, **caractérisé en ce que** ledit agencement de buses (4, 4') comprend des buses prévues pour fournir de l'eau dans l'air d'admission comprimé à la fois avant et après le moyen échangeur de chaleur (5, 5') dans la direction de l'écoulement d'air.

12. Moteur selon la revendication 11, **caractérisé en ce que** le moyen échangeur de chaleur (5, 5') peut être connecté à un système de refroidissement de moteur (14).

13. Moteur selon la revendication 11 ou 12, **caractérisé en ce que** le moteur (1) comprend en outre un agencement d'injection d'eau (8) pour injecter de l'eau directement dans chaque cylindre.

14. Moteur selon la revendication 11, 12 ou 13, **caractérisé en ce que** le moyen échangeur de chaleur (5, 5') comprend une partie intégrante de la construction du moteur (1).

15. Moteur selon l'une quelconque des revendications 11 à 14, **caractérisé en ce que** l'agencement de buses (4, 4') comprend plusieurs buses pouvant fonctionner indépendamment pour introduire de l'eau dans l'air d'admission comprimé selon les besoins.
